# EUROPÄISCHE PATENTSCHRIFT

(11) **EP 4 348 086 B1**
(45) Veröffentlichungstag und Bekanntmachung des Hinweises auf die Patenterteilung: **11.06.2025**
(21) Anmeldenummer: 22725494.3
(22) Anmeldetag: 26.04.2022
(51) Int. Cl.: F16H 63/34, F16H 63/50, F16H 61/04

(54) **VERFAHREN ZUM EINROLLEN EINES ELEKTRISCH ANGETRIEBENEN FAHRZEUGS IN EINE STILLSTANDSPOSITION**
METHOD FOR ROLLING AN ELECTRICALLY DRIVEN VEHICLE INTO A HALT POSITION
PROCÉDÉ POUR FAIRE ROULER UN VÉHICULE ÉLECTRIQUE DANS UNE POSITION D'ARRÊT

(30) Priorität: 01.06.2021 DE 102021205592
(43) Veröffentlichungstag der Anmeldung: 10.04.2024
(73) Patentinhaber: Robert Bosch GmbH, 70442 Stuttgart (DE)
(72) Erfinder: WETZEL, Gerhard, 70825 Korntal-Muenchingen (DE); SHIGEMATSU, Takashi, Yokohama, 245--0005 (JP)
(86) Internationale Anmeldenummer: PCT/EP2022/061039
(87) Internationale Veröffentlichungsnummer: WO 2022/253490

(56) Entgegenhaltungen:
- EP-A1- 3 919 783
- CN-A- 111 379 854
- DE-A1- 10 034 746
- DE-A1- 102009 023 498
- DE-A1- 102019 112 515
- DE-A1- 102019 216 848
- DE-T5- 112017 005 857

## Beschreibung

### Technisches Gebiet

Die Erfindung bezieht sich auf ein Verfahren zum Einrollen eines mit einer Parksperrenvorrichtung versehenen, elektrisch angetriebenen Fahrzeugs in eine Stillstandsposition des Fahrzeugs aus einer Position, in der eine Klinke an einer Verriegelung eines Parksperrenrads gehindert ist.

### Stand der Technik

DE 10 2015 217 975 A1 hat ein Verfahren zum Auslegen einer Parksperre eines Doppelkupplungsgetriebes eines Fahrzeugs zum Gegenstand. Das Doppelkupplungsgetriebe umfasst eine Parksperre. Zum Auslegen der Parksperre eines Doppelkupplungsgetriebes eines Fahrzeugs wird bei Detektion einer Fahrbahnneigung eine Drehmomentanforderung ausgegeben und eine Lastschaltkupplung des Doppelkupplungsgetriebes bei eingelegtem Gang im Teilgetriebe, dem die Lastschaltkupplung jeweils zugeordnet ist, geschlossen. Die zu schließende Lastschaltkupplung und das angeforderte Drehmoment sind derart gewählt, dass das Drehmoment dem bei eingelegter Parksperre über die Antriebsräder abtriebsseitig an dem Getriebe anliegenden Drehmoment, welches von der Sperrklinke abgestützt wird, entgegenwirkt und als Entlastungsmoment dient.

DE 10 2011 079 618 A1 bezieht sich auf eine Parksperre, die ein Parksperrenrad mit einer Verzahnung und eine Sperrklinke aufweist. Die Sperrklinke ist relativ zum Parksperrenrad bewegbar, derart, dass sie das Parksperrenrad blockiert oder freigibt. Das Parksperrenrad ist durch einen vom Verstellmechanismus unabhängig arbeitenden Antrieb bewegbar. Vor dem oder während des Ein- oder Auslegens der Parksperre mittels des Antriebs erfolgt eine Repositionierung des Parksperrenrads relativ zur Sperrklinke, wobei das Parksperrenrad momentenbeaufschlagt wird. Dadurch werden die durch den Verstellmechanismus jeweils aufzubringenden Ein- oder Auslegekräfte vermindert.

DE 10 2009 030 084 B4 bezieht sich auf ein Verfahren zum Lösen einer Parksperre eines Kraftfahrzeugs. Es erfolgt zunächst ein Ansteuern der Parksperre mittels einer Steuergröße zum Lösen der Parksperre. Dabei erfolgt ein Einstellen eines einem Hangabtriebsmoment entgegenwirkenden Antriebsmoments in Abhängigkeit von einer Steuergröße. Es wird ein Hangabtriebsmoment anhand einer kennzeichnenden Messgröße in Abhängigkeit von der Steuergröße ermittelt, welche mittels der Parksperre auf die gesperrten Räder wirkt. Dabei erfolgt das Einstellen eines dem Hangabtriebsmoment entgegenwirkenden Antriebsmoments in Abhängigkeit von der Messgröße. Es erfolgt die Einstellung des Antriebsmoments entgegen der Anfahrrichtung, falls die Anfahrrichtung und die Hangabtriebsrichtung gleichgerichtet sind, wobei das Hangabtriebsmoment das Antriebsmoment während des Lösens und/oder während des Haltens übersteigt oder alternativ ein Einstellen des Antriebsmoments in der Anfahrrichtung, diese und die Hangabtriebsrichtung entgegengesetzt zueinander gerichtet sind.

Parksperren werden heute in den meisten Automatikgetrieben eingesetzt, um ein ungewolltes Wegrollen des Fahrzeugs zu vermeiden. Auch bei elektrisch angetriebenen Fahrzeugen werden Parksperren in dem der elektrischen Maschine nachgeschalteten Getriebe eingebaut. Wird ein Fahrzeug, das mit einer Parksperre ausgerüstet ist, an einer Steigung oder an einem Gefälleabschnitt geparkt, so kann sich die nachfolgende Situation ergeben:
Der Fahrer bremst das Fahrzeug mit der Bremsanlage bis zum Stillstand ab und betätigt dann die Parksperre. Der Aktuator der Parksperre betätigt daraufhin über eine Mechanik die Klinke, um diese in eine Lücke des Parksperrenrads einzulegen. Dabei kann es vorkommen, dass der Zahn der Klinke auf den Zahn des Parksperrenrads trifft und eine Verriegelung unmöglich ist. In diesem Fall wird eine Feder derart vorgespannt, welche die Klinke auf das Parksperrenrad drückt. Löst nun der Fahrer die Bremse des Fahrzeugs, so beginnt dieses vor- oder zurückzurollen, je nachdem, ob es sich auf einem Gefälleabschnitt oder einem Steigungsabschnitt der Fahrstrecke befindet. Das Rollen des Fahrzeugs dreht die Antriebsräder, das Getriebe und somit auch das mit diesem gekoppelte Parksperrenrad. Die angedrückte Klinke rastet durch die Wirkung der Federvorspannung in die nächste Lücke des Parksperrenrads ein. Dabei wird jedoch das Fahrzeug abrupt abgestoppt und es treten einerseits Schwingungen und Drehmomente auf, die die Bauteile im Antriebsstrang mechanisch belasten, aber auch zu einer Geräusch- und Komfortminderung für den Fahrer führen können. Um dieses abrupte Abstoppen sanfter zu gestalten, wird in DE 10 2017 118 517 A1 beziehungsweise US 2018/0042895 A1 vorgeschlagen, den eingesteuerten Bremsdruck langsam zu reduzieren und dadurch ein langsames Einrollen des Fahrzeugs in die Parksperre zu erreichen.

Aus der DE 10 2019 216 848 A1 ist ein gattungsgemäßes Verfahren zum Einrollen eines mit einer Parksperrenvorrichtung versehenen, elektrisch angetriebenen Fahrzeugs in eine Stillstandsposition des Fahrzeugs mit den Merkmalen des Oberbegriffs des Anspruchs 1 bekannt. Dabei wird durch Ansteuerung einer elektrischen Maschine das Parksperrenrad vorwärts oder rückwärts gedreht, je nachdem wie am schnellsten eine Zahnlücke auf einer Außenverzahnung eines Parksperrenrades erreicht werden kann.

Ein weiteres Verfahren zur Betätigung einer Parksperre in einem mit einem Antriebselektromotor versehenen Fahrzeuges, ist aus der DE 10 2019 11 515 A1 bekannt. Dabei wird eine Position der Zahnlücke des Parksperrenrades gegenüber einem Zahn einer Parksperrenklinke durch einen im Antriebsstrang enthaltenen Antriebelektromotor eingestellt.

### Darstellung der Erfindung

Vorgeschlagen wird ein Verfahren zum Einrollen eines mit einer Parksperrenvorrichtung versehenen, elektrisch angetriebenen Fahrzeugs in eine Stillstandsposition des Fahrzeugs, wobei die Parksperrenvorrichtung eine Klinke und ein Parksperrenrad umfasst und dazu ausgebildet ist, im Betätigungsfall mit der Klinke in eine am Umfang eines Parksperrenrads ausgebildete Außenverzahnung einzugreifen und diese zu blockieren, wobei die Parksperrenvorrichtung einen Aktor umfasst, der über eine Aktuierungsmechanik die Klinke betätigt, wobei die Aktuierungsmechanik einen translatorisch entlang einer Führung bewegbaren, von einer Vorspannfeder beaufschlagten und auf eine Betätigungsfläche der Klinke einwirkenden Schieber aufweist, wobei bei Aktivierung der Parksperrenvorrichtung eine Position vorliegt, in der die Klinke an einer Verriegelung eines Parksperrenrads gehindert ist, mit nachfolgenden Verfahrensschritten:
a) Vorspannen der Vorspannfeder durch den Aktor bei Aktivierung der Parksperrenvorrichtung,
b) Übermittlung einer durch eine Lageerkennung erkannten Position des drehfest aufgenommenen Parksperrenrads an eine Steuereinheit,
c) Ermittlung eines Verdrehwinkels der Rotorwelle der elektrischen Maschine zur Erreichung der nächstgelegenen Zahnlücke einer Außenverzahnung des Parksperrenrads und
d) Ansteuerung der elektrischen Maschine zum Durchfahren des gemäß c) ermittelten Verdrehwinkels und ein geregeltes Anfahren der Position der gemäß c) ermittelten Zahnlücke.

Erfindungsgemäß wird eine Drehrichtung der elektrischen Maschine zum Durchfahren des gemäß c) ermittelten Verdrehwinkels aus der Information gewonnen wird, ob die elektrische Maschine bei Erreichen der Stillstandsposition des elektrisch angetriebenen Fahrzeugs ein Moment geliefert hat, oder ob die elektrische Maschine vor Erreichen der Stillstandsposition des elektrisch angetriebenen Fahrzeugs im Rekuperationsmodus durch die Fahrzeugbewegung gedreht wurde.

Auf die vorstehend beschriebene Weise lässt sich, ohne dass eine zusätzliche Sensorik erforderlich ist, in dem Fall, dass das elektrisch angetriebene Fahrzeug an einer Steigung beziehungsweise an einem Gefälleabschnitt geparkt wird und eine Zahn-auf-Zahn-Position an der Parksperrenvorrichtung vorliegt, ein sanftes Einrollen des Fahrzeugs erreichen. Dabei wird der Bremsdruck beziehungsweise der Gradient der Bremsdruckreduzierung nicht herangezogen, ferner bedarf es keiner zusätzlichen Sensoren oder anderer zusätzlicher Teile. Schließlich besteht in vorteilhafter Weise die Möglichkeit einer kostengünstigen und einfachen Realisierung.

Damit können unter Nutzung bereits vorhandener Komponenten sowohl der Verdrehwinkel zum Erreichen der nächstgelegenen Zahnlücken als auch die Drehrichtung ermittelt werden, in die die elektrische Maschine zu bewegen ist, ohne dass zusätzliche Hardwarekomponenten erforderlich wären.

In einer vorteilhaften Weiterbildung des erfindungsgemäß vorgeschlagenen Verfahrens wird die Drehbewegung der Klinke um eine Drehachse durch eine translatorische Bewegung einer Aktuierungsmechanik herbeigeführt. Dies erlaubt in vorteilhafter Weise eine Realisierung kurzer Stellwege, so dass der Aktor der Parksperreneinrichtung dementsprechend ausgelegt werden kann.

In einer weiteren vorteilhaften Ausführungsmöglichkeit des erfindungsgemäß vorgeschlagenen Verfahrens wird die Vorspannung der Vorspannfeder gemäß a) auf einen translatorisch bewegbaren Schieber der Aktuierungsmechanik der Parksperrenvorrichtung übertragen, so dass dieser gegen eine eine keilförmige Anlauffläche aufweisende Betätigungsfläche angestellt wird.

In einer weiteren vorteilhaften Ausführungsvariante des erfindungsgemäß vorgeschlagenen Verfahrens wird die Position des Parksperrenrads gemäß b) mittels einer als Resolver ausgeführten Lageerkennung detektiert. Dadurch kann in vorteilhafter Weise eine zuverlässige Signalgewinnung sichergestellt werden.

In einer weiteren vorteilhaften Ausführungsvariante des erfindungsgemäß vorgeschlagenen Verfahrens wird während der Durchführung der

Verfahrensschritte a) bis d) die Klinke in einer an die Außenverzahnung des Parksperrenrads angestellten Position gehalten. Dadurch ist sichergestellt, dass, sobald die Informationen in der Steuereinheit bezüglich des Verdrehwinkels und der Drehrichtung der elektrischen Maschine ermittelt sind, unverzüglich, ohne das Auftreten weiterer Verzögerungen in der Signalkette, eine Verriegelung der Parksperre in der nächsterreichbaren Zahnlücke der Außenverzahnung des Parksperrenrads herbeigeführt werden kann.

In weiterer, vorteilhafter Ausgestaltung des erfindungsgemäß vorgeschlagenen Verfahrens ist die Klinke nach Einrasten in der nächstgelegenen Zahnlücke der Außenverzahnung gemäß c) dort durch den Schieber der Aktuierungsmechanik arretiert, so dass das in seiner Parkposition verriegelte Fahrzeug zuverlässig gesichert bleibt.

Beim erfindungsgemäß vorgeschlagenen Verfahren wird die Klinke nach erneuter Ansteuerung der Parksperrenvorrichtung nach der Durchführung der geregelten Einrollbewegung in diese durch eine translatorische Bewegung des Schiebers wieder entsperrt, d. h. wieder freigegeben.

### Vorteile der Erfindung

Im Gegensatz zu den bekannten Verfahren, bei denen der Bremsdruck zur Ausführung einer Einrollbewegung genutzt werden kann und dort während des Einrollvorgangs langsam verringert wird, kommt das erfindungsgemäß vorgeschlagene Verfahren ohne die Heranziehung des Bremsdrucks aus. Bei elektrisch angetriebenen Fahrzeugen kann der Fahrer das Fahrzeug lediglich mittels des Ein-Pedal-Betriebs zum Stillstand bringen, da bei der NichtBetätigung des Fahrpedals das elektrisch angetriebene Fahrzeug durch das durch die elektrische Maschine aufgebrachte Schleppmoment abgebremst wird, d. h. zum Verzögern die Betätigung der Bremse nicht zwingend erforderlich ist. Tritt in dieser Fahrposition und in diesem Fahrmodus, d. h. dem Ein-Pedal-Betrieb, die Situation auf, dass das elektrisch angetriebene Fahrzeug an einer Steigung beziehungsweise an einem Gefälle zum Stillstand kommt und eine Zahn-auf-Zahn-Position an der Parksperre vorliegt, kann durch das erfindungsgemäß vorgeschlagene Verfahren ein sanftes Einrollen des Fahrzeugs erreicht werden. Dies erfolgt ohne zusätzliche Sensorik, in dem bereits bekannte Komponenten zur Lageerfassung des Parksperrenrads, beispielsweise in Gestalt eines Resolvers genutzt werden. Dadurch lässt sich eine zuverlässige Drehlage des Parksperrenrads einerseits ermitteln, andererseits ist über die Drehrichtung der elektrischen Maschine aus der Information bekannt, ob vor Stillstand des Fahrzeugs die elektrische Maschine ein Moment geliefert hat, oder ob dieser im Schleppmodus ein Moment durch die Fahrzeugbewegung aufgeprägt wurde. Aus der Lageerkennung und der bekannten Geometrie der Außenverzahnung des Parksperrenrads kann ohne Verwendung zusätzlicher Hardware die nächstgelegene Zahnlücke in der Außenverzahnung des Parksperrenrads bestimmt werden.

Ausgehend vom nunmehr bekannten Verdrehwinkel der Rotorwelle, auf dessen Umfang das Parksperrenrad drehfest befestigt wird und aus der bekannten Drehrichtung der elektrischen Maschine kann nunmehr ein geregeltes Einrollen des elektrisch angetriebenen Fahrzeugs in die Parksperre erreicht werden.

Als weiterer Vorteil des erfindungsgemäß vorgeschlagenen Verfahrens ist zu nennen, dass das Verfahren im Hinblick auf die Software auch nachträglich in bereits ausgelieferte Fahrzeuge als Update eingespielt werden kann und damit den Fahrkomfort auch bereits ausgelieferter Fahrzeuge verbessern kann.

### Kurze Beschreibung der Zeichnungen

Ausführungsformen der Erfindung werden anhand der Zeichnungen und der nachfolgenden Beschreibung näher erläutert.

Es zeigen:
- Figur 1: die Darstellung der Komponenten des elektrischen Antriebsstrangs eines elektrisch angetriebenen Fahrzeugs,
- Figur 2a: eine Parksperrenvorrichtung eines elektrisch angetriebenen Fahrzeugs mit einer Zahn-auf-Zahn-Position zwischen Außenverzahnung und Klinke und
- Figur 2b: eine in eine Zahnlücke der Außenverzahnung eingelegte Klinke einer Parksperrenvorrichtung.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

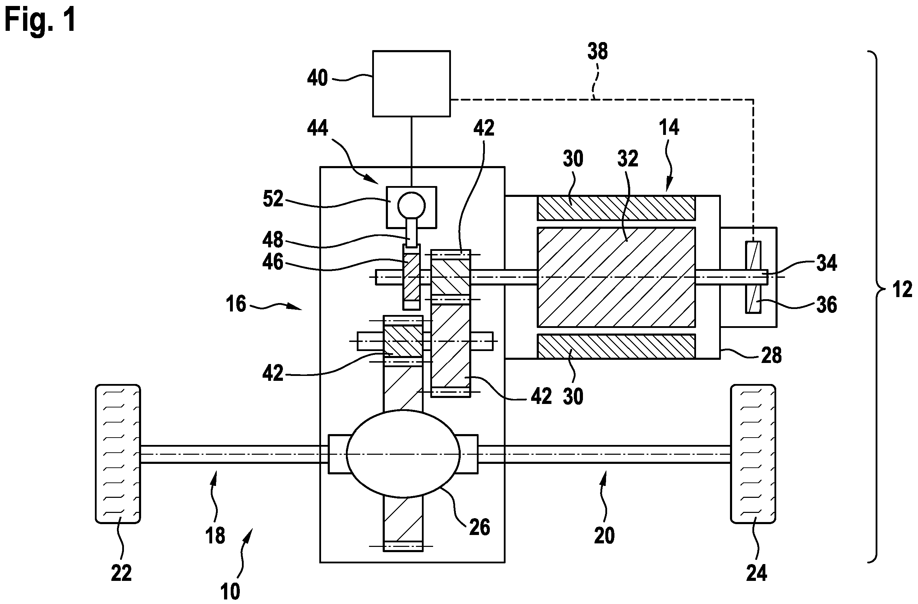

Figur 1 zeigt einen elektrischen Antriebsstrang 12 eines elektrisch angetriebenen Fahrzeugs 10 in schematischer Weise. Das elektrisch angetriebene Fahrzeug 10 umfasst den elektrischen Antriebsstrang 12, der neben einer elektrischen Maschine 14 ein Getriebe 16 enthält. Über das Getriebe 16 wird eine erste Antriebswelle 18 mit einem ersten Antriebsrad 22 und einem zweiten Antriebsrad 24 angetrieben. Innerhalb des Getriebes 16 befindet sich ein Achsdifferenzial 26. Seitlich am Getriebe 16 ist ein Gehäuse 28 angeflanscht, in welchem ein Stator 30 der elektrischen Maschine 14 aufgenommen ist. Im Stator 30 rotiert ein auf eine Rotorwelle 34 aufgenommener Rotor 32 der elektrischen Maschine.

Wie aus der Darstellung gemäß Figur 1 des Weiteren hervorgeht, ist der elektrischen Maschine 14, insbesondere deren Rotorwelle 34, eine Lageerfassung 36 zugeordnet, die beispielsweise als ein außen am Gehäuse 28 angebrachter Resolver ausgebildet sein kann. Die Lageerfassung 36 ist über eine Signalverbindung 38 mit einer Steuereinheit 40 im elektrischen Antriebsstrang 12 verbunden.

Aus Figur 1 geht des Weiteren hervor, dass im Getriebe 16 eine Anzahl von Zahnrädern 42 aufgenommen ist, welche die Rotationsbewegung des Rotors 32 der elektrischen Maschine 14 entsprechend der jeweiligen Übersetzung/en in ein Antriebsmoment umwandeln.

Des Weiteren ist dem Getriebe 16 gemäß der Darstellung in Figur 1 eine Parksperrenvorrichtung 44 zugeordnet. Die Parksperrenvorrichtung 44 umfasst ein Parksperrenrad 46, welches drehfest beispielsweise auf der Rotorwelle 34 der elektrischen Maschine 14 aufgenommen ist. Alternativ kann das Parksperrenrad 46 auch auf einer Welle im Getriebe 16, auf einer Zwischenwelle oder auch dem Achsdifferenzial 26 zugeordnet sein. Des Weiteren umfasst die Parksperrenvorrichtung 44 eine Klinke 48, welche in eine am Umfang des Parksperrenrads 46 ausgebildete Außenverzahnung 56 eingreift und diese im Betätigungsfall blockiert. Die Parksperrenvorrichtung 44 wird durch einen Aktor 52 betätigt, der seinerseits über die Steuereinheit 40 angesteuert wird.

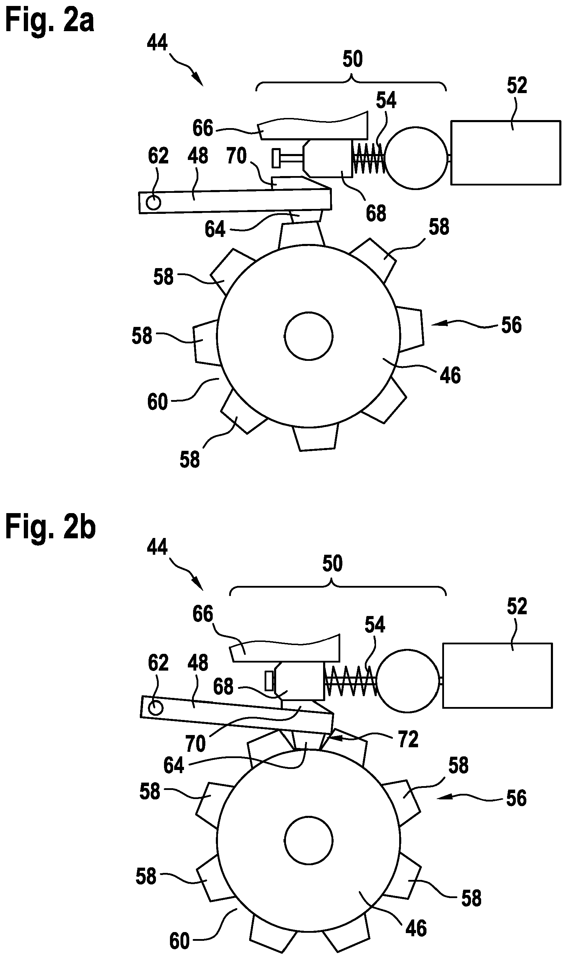

Der Darstellung gemäß Figur 2a ist eine Position der Parksperrenvorrichtung 44 zu entnehmen, in der es bei Stillstand eines elektrisch angetriebenen Fahrzeugs 10, ob an einem Gefälle oder an einer Steigung, zu einer Zahn-auf-Zahn-Position kommt. Damit ist im vorliegenden Zusammenhang gemeint, dass ein Klinkenzahn 64 einer Klinke 48, die um eine Drehachse 62 bewegbar ist, auf einem Zahn 58 der Außenverzahnung 56 am Außenumfang des Parksperrenrads 46 liegt, mithin nicht in eine zwischen zwei benachbarten Zähnen 58 der Außenverzahnung 56 gebildete Zahnlücke 60 einrasten kann und somit die Drehbewegung des Parksperrenrads 46 blockiert. Dieser Zustand der Parksperrenvorrichtung 44 ist in Figur 2a gezeigt. Oberhalb der um die Drehachse 62 verschwenkbaren Klinke 48 befindet sich eine Aktuierungsmechanik 50 der Parksperrenvorrichtung 44. Diese umfasst neben einer Vorspannfeder 54 einen Schieber 68, der translatorisch bewegbar ist und entlang einer Führung 66 translatorisch geführt ist. Der Schieber 68 wirkt auf eine Anstellfläche 70 ein, die beispielsweise als Keil ausgeführt sein kann und sich auf der Oberseite der um die Drehachse 62 verschwenkbaren Klinke 48 befindet.

Figur 2b zeigt einen Zustand, in welchem über den Schieber 68 durch Vorspannung der Vorspannfeder 54 der Klinke 48, die um die Drehachse 62 bewegbar ist, eine Verdrehbewegung und damit eine Eintauchbewegung 72 aufgezwungen wird. Im in Figur 2b dargestellten Zustand ist durch die translatorische Bewegung des Schiebers 68 entlang der Führung 66 die Betätigungsfläche 70 in Form eines Keils überfahren, so dass der Klinkenzahn 64 der Klinke 48 in die Zahnlücke 60 eingefahren ist und dadurch die Drehbewegung des Parksperrenrads 46 an der am Außenumfang ausgebildeten Außenverzahnung 56 blockiert bleibt. Solange der Schieber 68 sich in der in Figur 2b dargestellten Position befindet, bleibt der Klinkenzahn 64 der Klinke 48 in die Zahnlücke 60 zweier benachbarter Zähne 58 der Außenverzahnung 56 gemäß der Eintauchbewegung 72 eingefahren und dort auch arretiert.

Der Übergang vom Zustand in der Position gemäß Figur 2a, die eine Zahn-auf-Zahn-Position der Parksperrenvorrichtung 44 zeigt, in einen aktivierten, d.h. blockierten Zustand der Parksperrenvorrichtung 44, wird durch Anwendung des erfindungsgemäß vorgeschlagenen Verfahrens erreicht.

Die Lageerfassung 36 steht über die Signalverbindung 38 mit der Steuereinheit 40 in Verbindung. Bei der Steuereinheit 40 kann es sich um die Steuerung des gesamten elektrischen Antriebsstrangs 12 handeln, dazu kann jedoch auch eine separate Steuereinheit 40 eingesetzt werden.

Die Rotorwelle 34 der elektrischen Maschine 14 überträgt das Drehmoment der elektrischen Maschine 14 in das Getriebe 16. Dort findet über die Zahnräder 42 die Drehmomentwandlung statt. Über das Achsdifferenzial 26 wird das Drehmoment über die Antriebswellen 18, 20 auf die Antriebsräder 22 und 24 übertragen. In dem Getriebe 16 befindet sich die Parksperrenvorrichtung 44.

Das Parksperrenrad 46 der Parksperrenvorrichtung 44 ist beispielsweise derart mit der Rotorwelle 34 beziehungsweise dem Rotor 32 der elektrischen Maschine 14 verbunden, dass eine Drehbewegung, welche durch die Lageerfassung 36 in Gestalt eines Resolvers erfasst wird, auch zu einer entsprechenden Verdrehung des Parksperrenrads 46 führt. Dies bedeutet, dass die Stellung des Parksperrenrads 46, das drehfest auf der Rotorwelle 34 oder auf einer Zwischenwelle aufgenommen sein kann, eindeutig einem Signal der Lageerfassung 36 zugeordnet werden kann. Damit besteht die Möglichkeit, aus dem Signal der Lageerfassung 36 die Position des Parksperrenrads 46 exakt zu ermitteln.

Kommt es jetzt zu einem Stillstand des elektrisch angetriebenen Fahrzeugs 10 an einer Steigung oder an einem Gefälle und wird die Parksperrenvorrichtung 44 durch den Fahrer betätigt, so steuert das Steuergerät 40 den Parksperrenaktor 52 der Parksperrenvorrichtung 44 an, der wiederum über die Aktuierungsmechanik 50 die Klinke 48 betätigt. Im Falle der in Figur 2a dargestellten Zahn-auf-Zahn-Position wird die Vorspannfeder 54 vorgespannt und die Klinke 48 gegen die Außenverzahnung 56 beziehungsweise einen der Zähne 58 der Außenverzahnung 56 des Parksperrenrads 46 gedrückt. Die Lageerfassung 36 übermittelt dem Steuergerät 40 jetzt die Position des Parksperrenrads 46.

Im Steuergerät 40 wird errechnet, um welchen Verdrehwinkel die elektrische Maschine 14 im elektrischen Antriebsstrang 12 den Rotor 32 beziehungsweise die Rotorwelle 34 verdrehen muss, damit die nächstgelegene Zahnlücke 60 der Außenverzahnung 56 des Parksperrenrads 46 mit der Klinke 48 beziehungsweise deren Klinkenzahn 64 in Eingriff kommen kann.

Im Steuergerät 40 ist die Drehrichtung für die elektrische Maschine 14 dadurch bekannt, dass im Falle des Abstellens des Fahrzeugs an einer Steigung die elektrische Maschine 14 vor dem Stillstand ein Moment geliefert hat. Bei Passage eines Gefälleabschnitts vor dem Abstellen des Fahrzeugs wurde durch die Fahrzeugbewegung der elektrischen Maschine 14 ein Schleppmoment aufgeprägt.

Da dem Steuergerät 40 nunmehr die Drehrichtung der elektrischen Maschine 14 sowie der Verdrehwinkel zum Erreichen der nächstgelegenen Zahnlücke 60 bekannt ist, kann diese Position nunmehr exakt geregelt angefahren werden, was dem Zustand der Figur 2b entspricht, in der eine Eintauchbewegung 72 der Klinke 48 in die nächstgelegene ermittelte Zahnlücke 60 der Außenverzahnung 56 des Parksperrenrads 46 stattgefunden hat.

Bei diesem Vorgang ist nicht erforderlich, dass der Fahrer des elektrisch angetriebenen Fahrzeugs 10 das Bremspedal betätigt. Sollte der Fahrer jedoch aus Gewohnheit das Bremspedal betätigt haben und anschließend wieder gelöst haben, so wird die Bremsbetätigung beziehungsweise das Lösen der Bremse an das Steuergerät 40 beispielsweise über einen CAN-Bus im elektrisch angetriebenen Fahrzeug 10 übertragen.

Beginnt das elektrisch angetriebene Fahrzeug 10 sich zu bewegen und wird über die Antriebsräder 22, 24, die Antriebswellen 18 und 20 das Getriebe 16 und damit auf die elektrische Maschine 14 eine Drehbewegung übertragen, so wird diese Drehbewegung durch die Lageerfassung 36 erfasst. Die Regelung der weiteren Bewegung, d. h. des Einrollens des elektrisch angetriebenen Fahrzeugs 10 in die Parksperrenvorrichtung 44 über eine entsprechende Ansteuerung der elektrischen Maschine 14 im elektrischen Antriebsstrang 12 kann wie vorstehend beschrieben erfolgen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich.

## Patentansprüche

1. Verfahren zum Einrollen eines mit einer Parksperrenvorrichtung (44) versehenen, elektrisch angetriebenen Fahrzeugs (10) in eine Stillstandsposition des Fahrzeugs, wobei die Parksperrenvorrichtung (44) eine Klinke (48) und ein Parksperrenrad (46) umfasst und dazu ausgebildet ist, im Betätigungsfall mit der Klinke (48) in eine am Umfang eines Parksperrenrads (46) ausgebildete Außenverzahnung (56) einzugreifen und diese zu blockieren, wobei die Parksperrenvorrichtung (44) einen Aktor (52) umfasst, der über eine Aktuierungsmechanik (50) die Klinke (48) betätigt, wobei die Aktuierungsmechanik (50) einen translatorisch entlang einer Führung bewegbaren, von einer Vorspannfeder (54) beaufschlagten und auf eine Betätigungsfläche (70) der Klinke (48) einwirkenden Schieber (68) aufweist, wobei bei Aktivierung der Parksperrenvorrichtung (44) eine Position vorliegt, in der die Klinke (48) an einer Verriegelung eines Parksperrenrads (46) gehindert ist, mit nachfolgenden Verfahrensschritten:
a) Vorspannen der Vorspannfeder (54) durch den Aktor (52) bei Aktivierung der Parksperrenvorrichtung (44),
b) Übermittlung einer durch eine Lageerkennung (36) erkannten Position des drehfest aufgenommenen Parksperrenrads (46) an eine Steuereinheit (40),
c) Ermittlung eines Verdrehwinkels der Rotorwelle (34) der elektrischen Maschine (14) zur Erreichung der nächstgelegenen Zahnlücke (60) einer Außenverzahnung (56) des Parksperrenrads (46) und
d) Ansteuerung der elektrischen Maschine (14) zum Durchfahren des gemäß c) ermittelten Verdrehwinkels und ein geregeltes Anfahren der Position der gemäß c) ermittelten Zahnlücke (60),
**dadurch gekennzeichnet, dass** eine Drehrichtung der elektrischen Maschine (14) zum Durchfahren des gemäß c) ermittelten Verdrehwinkels aus der Information gewonnen wird, ob die elektrische Maschine (14) bei Erreichen der Stillstandsposition des elektrisch angetriebenen Fahrzeugs (10) ein Moment geliefert hat, oder ob die elektrische Maschine (14) vor Erreichen der Stillstandsposition des elektrisch angetriebenen Fahrzeugs (10) im Rekuperationsmodus durch die Fahrzeugbewegung gedreht wurde.

2. Verfahren gemäß Anspruch 1, **dadurch gekennzeichnet, dass** eine Verdrehbewegung der Klinke (48) um eine Drehachse (62) durch eine translatorische Bewegung der Aktuierungsmechanik (50) initiiert wird.

3. Verfahren gemäß den Ansprüchen 1 oder 2, **dadurch gekennzeichnet, dass** die Vorspannung der Vorspannfeder (54) gemäß a) den translatorisch bewegbaren Schieber (68) gegen die Betätigungsfläche (70) anstellt.

4. Verfahren gemäß Anspruch 1, **dadurch gekennzeichnet, dass** die Position des Parksperrenrads (46) gemäß b) mittels einer als Resolver ausgeführten Lageerkennung (36) detektiert wird.

5. Verfahren gemäß Anspruch 1, **dadurch gekennzeichnet, dass** während der Durchführung der Verfahrensschritte a) bis d) die Klinke (48) in einer an die Außenverzahnung (56) des Parksperrenrads (46) angestellten Position gehalten wird.

6. Verfahren gemäß Anspruch 1, **dadurch gekennzeichnet, dass** die Klinke (48) nach Einrasten in der nächstgelegenen Zahnlücke (60) der Außenverzahnung (56) gemäß c) dort durch den Schieber (68) arretiert bleibt.

7. Verfahren gemäß Anspruch 1, **dadurch gekennzeichnet, dass** die Klinke (48) nach erneuter Ansteuerung der Parksperrenvorrichtung (44) nach dem geregelten Einrollvorgang in diese durch eine translatorische Bewegung des Schiebers (68) freigegeben wird.

## Claims

1. Method for rolling an electrically driven vehicle (10) provided with a parking lock device (44) into a standstill position of the vehicle, wherein the parking lock device (44) comprises a pawl (48) and a parking lock gear (46) and is designed, when activated, to engage by way of the pawl (48) in an external toothing (56) formed on the circumference of a parking lock gear (46) and to block same, wherein the parking lock device (44) comprises an actuator (52), which activates the pawl (48) via an actuating mechanism (50), wherein the actuating mechanism (50) comprises a slider (68) which is translationally movable along a guide, is biased by a biasing spring (54) and acts on an activating surface (70) of the pawl (48), wherein, when the parking lock device (44) is activated, there is a position in which the pawl (48) is prevented from locking a parking lock gear (46), said method comprising the following method steps:
a) biasing the biasing spring (54) by way of the actuator (52) when the parking lock device (44) is activated,
b) transmitting to a control unit (40) a position of the parking lock gear (46) accommodated in a rotationally fixed manner, said position being identified by a position identification system (36),
c) determining an angle of rotation of the rotor shaft (34) of the electric machine (14) to reach the nearest tooth space (60) of an outer toothing (56) of the parking lock gear (46) and
d) actuating the electric machine (14) to pass through the angle of rotation determined in accordance with c) and controlling an approach to the position of the tooth space (60) determined in accordance with c),
**characterized in that** a direction of rotation of the electric machine (14) to pass through the angle of rotation determined in accordance with c) is obtained from the information about whether the electric machine (14) has delivered a torque when the standstill position of the electrically driven vehicle (10) is reached or whether the electric machine (14) was rotated by the vehicle movement in recuperation mode before the standstill position of the electrically driven vehicle (10) was reached.

2. Method according to Claim 1, **characterized in that** a rotational movement of the pawl (48) about an axis of rotation (62) is initiated by a translational movement of the actuating mechanism (50).

3. Method according to Claim 1 or 2, **characterized in that** the biasing of the biasing spring (54) in accordance with a) adjusts the translationally movable slider (68) against the activating surface (70).

4. Method according to Claim 1, **characterized in that** the position of the parking lock gear (46) in accordance with b) is detected by means of a position identification system (36) in the form of a resolver.

5. Method according to Claim 1, **characterized in that**, during the execution of method steps a) to d), the pawl (48) is held in a position set against the outer toothing (56) of the parking lock gear (46).

6. Method according to Claim 1, **characterized in that** the pawl (48) remains locked there by the slider (68) after latching in the nearest tooth gap (60) of the outer toothing (56) in accordance with c).

7. Method according to Claim 1, **characterized in that** the pawl (48) is released by a translational movement of the slider (68) after the re-actuation of the parking lock device (44) after the controlled rolling process into the latter.

## Revendications

1. Procédé pour faire rouler un véhicule électrique (10) équipé d'un dispositif de verrouillage de stationnement (44) vers une position d'arrêt du véhicule, le dispositif de verrouillage de stationnement (44) comprenant un cliquet (48) et une roue de verrouillage de stationnement (46) et étant réalisé de manière à s'engager, en cas d'actionnement, avec le cliquet (48) dans une denture extérieure (56) formée sur la périphérie d'une roue de verrouillage de stationnement (46) et à bloquer celle-ci, le dispositif de verrouillage de stationnement (44) comprenant un actionneur (52) qui actionne le cliquet (48) par l'intermédiaire d'un mécanisme d'actionnement (50), le mécanisme d'actionnement (50) comportant un coulisseau (68) mobile en translation le long d'un guide, sollicité par un ressort de sollicitation (54) et agissant sur une surface d'actionnement (70) du cliquet (48), dans lequel, lors de l'activation du dispositif de verrouillage de stationnement (44), il existe une position à laquelle le cliquet (48) est empêché de verrouiller une roue de verrouillage de stationnement (46), comprenant les étapes de procédé suivantes :
a) sollicitation du ressort de sollicitation (54) par l'actionneur (52) lors de l'activation du dispositif de verrouillage de stationnement (44),
b) transmission à une unité de commande (40) d'une position, reconnue par reconnaissance de position (36), de la roue de verrouillage de stationnement (46) reçue de manière solidaire en rotation,
c) détermination d'un angle de rotation de l'arbre de rotor (34) du moteur électrique (14) permettant d'atteindre l'interstice entre dents (60) le plus proche d'une denture extérieure (56) de la roue de verrouillage de stationnement (46) et
d) commande du moteur électrique (14) pour parcourir l'angle de rotation déterminé selon c) et déplacement régulé vers la position de l'interstice entre dents (60) déterminé selon c),
**caractérisé en ce qu'**un sens de rotation du moteur électrique (14) pour parcourir l'angle de rotation déterminé selon c) est obtenu à partir des informations indiquant si le moteur électrique (14) a délivré un couple lorsque le véhicule électrique (10) a atteint la position d'arrêt, ou si le moteur électrique (14) a été mis en rotation en mode de récupération par le mouvement du véhicule avant d'atteindre la position d'arrêt du véhicule électrique (10).

2. Procédé selon la revendication 1, **caractérisé en ce qu'**un mouvement de rotation du cliquet (48) autour d'un axe de rotation (62) est déclenché par un mouvement de translation du mécanisme d'actionnement (50).

3. Procédé selon les revendications 1 ou 2, **caractérisé en ce que** la sollicitation du ressort de sollicitation (54) selon a) applique le coulisseau (68) mobile en translation contre la surface d'actionnement (70).

4. Procédé selon la revendication 1, **caractérisé en ce que** la position de la roue de verrouillage de stationnement (46) selon b) est détectée au moyen d'une détection de position (36) réalisée sous la forme d'un résolveur.

5. Procédé selon la revendication 1, **caractérisé en ce que**, pendant la mise en œuvre des étapes a) à d) du procédé, le cliquet (48) est maintenu à une position appliquée sur la denture extérieure (56) de la roue de verrouillage de stationnement (46).

6. Procédé selon la revendication 1, **caractérisé en ce que** le cliquet (48), après s'être enclenché dans l'interstice entre dents (60) le plus proche de la denture extérieure (56) selon c), y reste bloqué par le coulisseau (68).

7. Procédé selon la revendication 1, **caractérisé en ce que** le cliquet (48) est libéré par un mouvement de translation du coulisseau (68) après une nouvelle commande du dispositif de verrouillage de stationnement (44) et après le processus de roulage régulé vers celui-ci.
